# EUROPÄISCHE PATENTANMELDUNG

(11) **EP 2 020 754 A1**
(43) Veröffentlichungstag der Anmeldung: **04.02.2009**
(21) Anmeldenummer: 07015311.9
(22) Anmeldetag: 03.08.2007
(51) Int. Cl.: H04B 1/38, G01S 5/02

(54) **Vorrichtung zur Positionskontrolle eines Objekts und Steuerungsverfahren**

(71) Anmelder: Lufthansa Systems Group GmbH, 65451 Kelsterbach (DE)
(72) Erfinder: Rohr, Joachim, 22399 Hamburg (DE); Unruh, Jürgen, 65239 Hochheim (DE)
(74) Vertreter: Peterreins, Frank

(57) **Zusammenfassung**

Die vorliegende Erfindung betrifft eine Vorrichtung zur Positionskontrolle eines Objekts, umfassend eine Mobilfunkeinheit (4) zur Übermittlung von Daten über ein Mobilfunknetz (11), ein Messglied (2) und einen Steuerrechner (3), wobei die Mobilfunkeinheit (4) über den Steuerrechner (3) ansteuerbar ist und wobei das Messglied (2) mit dem Steuerrechner (3) verbunden ist. Erfindungsgemäß ist vorgesehen, dass mittels des Messglieds (2) ein erster Transportzustand unterscheidbar ist, in dem sich die Vorrichtung in einem Flugzeug oder in einem Flugzustand befindet. Durch die Ermittlung des Transportzustands der Vorrichtung bezüglich der Anordnung der Vorrichtung in einem Flugzeug oder in einem Flugzustand mittels des Messglieds ist die Möglichkeit eröffnet, die weitere Funktion der Vorrichtung, insbesondere hinsichtlich der Mobilfunkeinheit, so zu steuern, dass eine Gefährdung der Steuerelektronik des Flugzeugs auszuschließen ist. Falls mit ausreichender Sicherheit auf das Nichtvorliegen des ersten Transportzustands erkannt wird, so wird eventuell in Abhängigkeit weiterer Kriterien die Mobilfunkeinheit aktiviert und ein Datensatz an eine Datenzentrale versendet. Dieser kann zum Beispiel eine ermittelte Position der Vorrichtung sowie eine entsprechende individuelle Kennung enthalten. Auf diese Weise wird eine Vorrichtung zur Positionskontrolle eines Objekts bereitgestellt, die selbstständig und universell den Sicherheitsanforderungen im Luftverkehr bezüglich der Emission von elektromagnetischer Strahlung Rechnung trägt.

## Beschreibung

Die vorliegende Erfindung betrifft eine Vorrichtung zur Positionskontrolle eines Objekts nach dem Oberbegriff des Anspruchs 1. Die Erfindung betrifft zudem ein Steuerungsverfahren für eine erfindungsgemäße Vorrichtung.

Es ist bekannt, für Kraftfahrzeuge Ortungssysteme vorzusehen, die auf Basis einer GSM-Mobilfunkeinheit eine z.B. mittels eines GPS-Empfängers ermittelte Position an eine Gegenstelle, z.B. eine Zentrale zur Datenauswertung, zu übermitteln. Solche Vorrichtungen dienen der Positions- und Bewegungsüberwachung von Einzelfahrzeugen oder auch Kraftfahrzeugflotten. Die Überwachungsvorrichtungen sind dabei regelmäßig dem gesamten Kraftfahrzeug als bewegliche Einheit zugeordnet.

Es ist die Aufgabe der Erfindung, eine Vorrichtung zur Positionskontrolle eines Objekts anzugeben, die selbstständig und universell den Sicherheitsanforderungen im Luftverkehr bezüglich der Emission von elektromagnetischer Strahlung Rechnung trägt.

Diese Aufgabe wird für eine eingangs genannte Vorrichtung erfindungsgemäß mit den kennzeichnenden Merkmalen des Anspruchs 1 gelöst. Durch die Ermittlung des Transportzustands der Vorrichtung bezüglich der Anordnung der Vorrichtung in einem Flugzeug oder in einem Flugzustand mittels des Messglieds ist die Möglichkeit eröffnet, die weitere Funktion der Vorrichtung, insbesondere hinsichtlich der Mobilfunkeinheit, so zu steuern, dass eine Gefährdung der Steuerelektronik des Flugzeugs auszuschließen ist. Falls mit ausreichender Sicherheit auf das Nichtvorliegen des ersten Transportzustands erkannt wird, so wird eventuell in Abhängigkeit weiterer Kriterien die Mobilfunkeinheit aktiviert und ein Datensatz an eine Datenzentrale versendet. Dieser kann zum Beispiel eine ermittelte Position der Vorrichtung sowie eine entsprechende individuelle Kennung enthalten.

In bevorzugter Weiterbildung ist es dabei auf einfache Weise vorgesehen, dass die Mobilfunkeinheit aufgrund der Erkennung des ersten Transportzustands deaktiviert ist, so dass in dem ersten Transportzustand keine Funksignale bzw. elektromagnetischen Wellen durch die Mobilfunkeinheit ausgestrahlt werden. Alternativ oder ergänzend kann es jedoch auch vorgesehen sein, dass je nach den aktuellen Sicherheitsbestimmungen lediglich eine reduzierte Sendeleistung der Mobilfunkeinheit oder ähnliche Maßnahmen aus der Erkennung des ersten Transportzustands erfolgen.

Im Interesse einer universellen Einsetzbarkeit der erfindungsgemäßen Vorrichtung sind die Mobilfunkeinheit, das Messglied und der Steuerrechner als einheitliches Modul ausgebildet, wodurch ein variabler, modulartiger Einsatz an verschiedenen zu kontrollierenden Objekten je nach Bedarf ermöglicht ist. Besonders bevorzugt hat das Modul dabei eine autarke Energieversorgung. Dabei kann es sich z.B. um einen für die Luftfahrt zugelassenen Akkumulator handeln, um eine Einwegbatterie oder auch um eine Brennstoffzelle. Zweckmäßig ist alternativ oder ergänzend die Möglichkeit einer externen Spannungsversorgung vorgesehen. Sinnvoll wird eine externe Spannungsversorgung einen in dem Modul integrierten Akkumulator automatisch aufladen oder im aufgeladenen Zustand erhalten.

In einer besonders bevorzugten Ausführungsform weist das Messglied einen Sensor zur Höhenmessung auf, z.B. einen Luftdrucksensor. Ein mögliches Kriterium für die Erkennung des ersten Transportzustands kann dann zum Beispiel dahingehend lauten, dass eine über den Luftdruck gemessene Höhe nicht oberhalb eines Grenzwerts, zum Beispiel 4000 Meter, liegen darf.

Alternativ oder ergänzend kann das Messglied einen Bewegungssensor aufweisen. Ein Bewegungssensor wird im Allgemeinen im Zustand eines Lufttransports aufgrund der dauernd vorliegenden Bewegungen und Vibrationen ein entsprechendes Signal generieren, das eine Bewegung der Vorrichtung anzeigt.

Weiterhin alternativ oder ergänzend kann das Messglied zumindest einen, insbesondere zumindest zwei Vibrationssensoren aufweisen. Dabei kann ein Kriterium für das Vorliegen des ersten Transportzustands ein von den Sensoren gemessenes Vibrationssignal sein.

In einer alternativen oder ergänzenden Ausführung kann das Messglied einen Ultraschallsensor aufweisen. Insbesondere bei einer Ausführungsform, bei der die Vorrichtung im Bereich eines laufenden Triebswerks eines Luftfahrzeugs angeordnet ist, kann der Ultraschallsensor eine zuverlässige Information über den Betriebszustand des Triebwerks liefern. Dabei wird im Allgemeinen das Vorliegen einer ausreichend starken Ultraschallquelle auf einen Betrieb des Triebwerks hinweisen, woraufhin die Mobilfunkeinheit der Vorrichtung deaktiviert wird.

In besonders bevorzugter Ausführungsform hat das Messglied einen Empfangsteil für ein Satelliten-Orlungssystem (GPS). Vorteilhaft ist dabei über das Messglied eine Signalstärke des Satelliten-Ortungssystem ermittelbar, wobei die Signalstärke zumindest optional zur Erkennung des ersten Transportzustands dient. Dem liegt die Beobachtung zugrunde, dass die Signalstärke des von GPS-Satelliten ausgestrahlten Signals im Inneren eines Rumpfes eines Transportflugzeugs typisch stark gedämpft ist, zum Beispiel um rund 20 Dezibel. Zweckmäßig wird dabei die empfangene Signalstärke von einem oder mehreren Satelliten über einen ausreichenden Zeitraum, z.B. 30 Sekunden, gemittelt und die so ermittelte Signalstärke mit einem Schwellwert verglichen. Ist die ermittelte Signalstärke ausreichend niedrig, so besteht ein recht zuverlässiges Kriterium dafür, dass sich die Vorrichtung im Inneren eines Transportflugzeugs, insbesondere mit geschlossener Ladeluke, befindet. Für die vorliegenden Zwecke der Optimierung der Logistik durch einer Kontrolle der Transportwege des Objekts reicht regelmäßig eine täglich einmalige Positionsabfrage des Objekts aus. Es kann daher recht weitgehend hingenommen werden, dass die Mobilfunkeinheit der Vorrichtung auch bei ungünstiger Lagerung außerhalb eines Flugzeugs, zum Beispiel in einer stark abschirmenden Lagerhalle, deaktiviert ist.

Bei Vorsehen eines Satelliten-Ortungssystems wird besonders vorteilhaft eine Information, insbesondere die momentane Position und/oder Geschwindigkeit, durch das Satelliten-Ortungssystem ermittelt. In bevorzugter Ausführung kann dabei die ermittelte Position und/oder Geschwindigkeit über die Mobilfunkeinheit weitergeleitet werden, wodurch sich eine besonders genaue Positionskontrolle der Vorrichtung ergibt. Zudem kann die übermittelte Information ein weiteres Kriterium für das Vorliegen des ersten Transportzustands darstellen, z.B. indem die ermittelte Geschwindigkeit mit einem Grenzwert, zum Beispiel 120 km/h, verglichen wird. Geschwindigkeiten oberhalb dieses Grenzwerts zeigen zuverlässig das Vorliegen des Flugzustands an.

In einer weiteren vorteilhaften Ausführungsform ist mittels des Messglieds ein weiterer Transportzustand unterscheidbar, wobei das Objekt in dem weiteren Transportzustand in Bewegung ist und sich nicht in einem Flugzeug befindet. Beispielsweise kann sich das Objekt in diesem weiteren Transportzustand auf einem Lastkraftwagen befinden. Da hierbei keine Sicherheitsbedenken bezüglich der Absendung eines Datensatzes mittels der Mobilfunkeinheit bestehen, ist die Unterscheidung eines solchen Transportzustands vom Zustand in einem Flugzeug gewünscht. Ein mögliches Kriterium kann dabei z.B. das dauerhafte Vorliegen einer ausreichend geringen Geschwindigkeit (gemessen mittels GPS) in Verbindung mit einer höheren GPS-Signalstärke sein, als sie üblicherweise in einem Flugzeugrumpf empfangbar ist.

Weiterhin alternativ oder ergänzend kann mittels des Messglieds ein weiterer Transportzustand unterscheidbar sein, in dem das Objekt sich nicht in einem Flugzeug und nicht in Bewegung befindet. In diesem Transportzustand befindet sich das Objekt regelmäßig in einer Lagerhalle, auf einem Flugfeld oder sonstwie in einer zumindest zeitweise ortsfest gelagerten Position. Zumindest in diesem Transportzustand, der über die Signalhöhe eines GPS-Signals, fehlende Vibrationen, eine durch GPS gemessene Bewegungslosigkeit oder ähnliche Parameter besonders zuverlässig ermittelbar ist, kann eine Aktivierung des Mobilfunkteils mit einer nachfolgenden Übermittlung eines Datensatzes bezüglich Position und Zustand des überwachten Objekts erfolgen.

Zur Verbesserung der Sicherheit kann es vorteilhaft vorgesehen sein, dass auf das Nichtvorliegen des ersten Transportzustands nur dann erkannt wird, wenn zumindest zwei voneinander unabhängige Signale das Nichtvorliegen des ersten Transportzustands anzeigen. Hierdurch wird die unzulässige Aktivierung des Mobilfunkteils aufgrund einer Fehlentscheidung besonders wirksam vermieden. Auf vorteilhafte Weise sind die beiden unabhängigen Signale aus der Gruppe GPS-Signalstärke, GPS-ermittelte Geschwindigkeit, Vibration und Luftdruck ausgewählt. Z.B. kann es vorgesehen sein, dass das Mobilfunkteil aufgrund der Logik des Steuerrechners nur dann aktiviert werden kann, wenn die GPS-Signalstärke oberhalb eines Schwellwerts liegt und die GPS-ermittelte Geschwindigkeit unterhalb eines Schwellwerts liegt. Zweckmäßig kann zusätzlich noch vorgesehen sein, dass keine oder nur ausreichend kleine Vibrationen messbar sind und der Luftdruck sich oberhalb eines bestimmen Schwellwerts befinden muss.

Allgemein bevorzugt arbeitet die Mobilfunkeinheit nach dem GSM-Standard für Mobilfunknetze. Der GSM-Standard ist weltweit verbreitet, so dass eine erfindungsgemäße Vorrichtung problemlos besonders universell einsetzbar ist. Eine Datenübermittlung kann dabei auf einfache Weise über die Protokolle SMS oder auch GPRS oder andere geeignete standardisierte und insbesondere weit verbreitete Protokolle erfolgen.

Die Erfindung betrifft zudem ein Transportgut zur Beförderung mit einem Luftfahrzeug, wobei an dem Transportgut eine Vorrichtung nach einem der Ansprüche 1 - 16 angeordnet ist. Das Transportgut stellt dabei das durch die Vorrichtung zu überwachende Objekt dar. Besonders vorteilhaft kann das Transportgut ein ULD-Container sein (ULD = Unit Load Device). Solche in der Luftfracht standardisierten Container werden zur Verstauung von beliebig geformtem Transportgut in Luftfahrzeugen verwendet.

In einer besonders bevorzugten Ausführung ist das Transportgut ein Triebwerkstransportgestell. Es ist üblich, Flugzeugtriebwerke in zentralen spezialisierten Betrieben zu warten und zu überholen, und sie nachfolgend zur weiteren Verwendung international zu verschicken, insbesondere mittels Luftfracht. Dabei kommen spezielle Transportgestelle zum Einsatz, die ihrerseits aufwendig konstruiert sind und bereits für sich einen hohen Wert darstellen.

Flugzeugtriebwerke stellen ein besonders wertvolles Transportgut dar, das in besonderem Maße ständig in Bewegung ist, entweder aufgrund der Verschickung in einem Triebwerkstransportgestell oder auch während der Verwendung als Antrieb an einem Flugzeug. In jedem Fall ist es gewünscht, insbesondere Flugzeugtriebwerke hinsichtlich ihrer Position engmaschig zu überwachen, um eine optimierte Logistik bereitstellen zu können. Logistisches Ziel ist es dabei, möglichst geringe Wartezeiten und möglichst wenige Verlust- und Suchvorgänge zu erzielen.

Die Erfindung umfasst vorteilhaft auch ein Triebwerk für ein Luftfahrzeug, an dem eine Vorrichtung nach einem der Ansprüche 1 bis 16 angeordnet ist. Ein solches erfindungsgemäßes Triebwerk kann als aktive Antriebseinheit eines Flugzeugs eingesetzt sein, wobei die Vorrichtung allgemein im Inneren des Triebwerks fest angebracht ist. Eine solche Überwachung von Triebwerken ist insbesondere bei Leihtriebwerken gewünscht und sinnvoll. Hier kommt es zu Situationen, bei denen fehlende Informationen vom Leihkunden zu erheblichen Mehraufwendungen führen. Gelegentlich ergeben sich auch Rückforderungen von Leihtriebwerken, bei denen eine Standortbestimmung nur mit hohem Aufwand möglich ist. In solchen Fällen kann die erfindungsgemäße Vorrichtung den aktuellen Standort des Leihtriebwerks melden und allgemein eine umfassende Überwachung der Betriebssituation des Leihtriebwerks ermöglichen.

Eine Spannungsversorgung der Vorrichtung kann dabei über das Triebwerk erfolgen, wobei zweckmäßig zusätzlich ein Akkumulator an der Vorrichtung vorgesehen sein kann, damit insbesondere im Fall des ausgeschalteten Triebwerks eine Statusinformation über die Mobilfunkeinheit verschickt werden kann. Es kann aber auch vorgesehen sein, dass eine Aktivierung der Vorrichtung nur bei eingeschalteter Triebwerks-Spannungsversorgung erfolgt.

Im Allgemeinen liegt der erste Transportzustand vor, wenn das Triebwerk in Betrieb ist, zumindest aber, falls das Triebwerk eine bestimmte Drehzahl erreicht hat oder das Flugzeug sich in der Luft befindet. Im Fall der Anordnung der erfindungsgemäßen Vorrichtung an einem im Einsatz befindlichen Triebwerk kann z.B. die Spannungsversorgung des Triebwerks ein besonders zuverlässiger Parameter zur Deaktivierung der Mobilfunkeinheit sein. Weiterhin kann ein Ultraschallsensor bei dieser Ausführungsform vorgesehen sein, da im Betrieb befindliche Triebwerke regelmäßig starke Schallwellen im Ultraschallbereich erzeugen. Vibrationssensoren können einfach oder zur Sicherheit doppelt vorgesehen sein, um den Betrieb des Triebwerks über das Messglied anzuzeigen. Auf diese Weise lässt sich insgesamt sicherstellen, dass die Mobilfunkeinheit nicht während des ersten Zustands bzw. während des Betriebs des Triebwerks Funksignale sendet.

In bevorzugter Detailgestaltung einer erfindungsgemäßen Vorrichtung, die an einem im Einsatz befindlichen Triebwerk angeordnet ist, kann insbesondere vorteilhaft auf einen GPS-Empfänger verzichtet werden. Eine Lokalisierung der Vorrichtung bzw. des Triebwerks kann dann einfach über Kenndaten der mit der Mobilfunkeinheit verbundenen Gegenstelle erfolgen. Je nach technischer Detailgestaltung kann eine solche Lokalisierung mehr oder weniger genau sein. Regelmäßig werden an Triebwerken angeordnete Vorrichtungen vom Ort eines Flughafens aus mit einer Zentrale kommunizieren, so dass die Lokalisierung über die Kennung der aktuellen Mobilfunk-Gegenstelle immer ausreichend genau ist. Weitere Vorteile eines optionalen Verzichts auf eine GPS-Empfangseinheit ergeben sich aus einer aufgrund technischer Vereinfachung erhöhten Zuverlässigkeit und den geringeren Kosten.

Die Erfindung umfasst zudem ein Steuerungsverfahren für eine erfindungsgemäße Vorrichtung mit den Merkmalen des Anspruchs 21. Dabei wird allgemein mittels des Messglieds ein erster Messwert gemessen und mit einem vordefinierten ersten Schwellwert verglichen. Die Mobilfunkeinheit wird dann in Abhängigkeit vom Ausgang des Vergleichs aktiviert, so dass ein Aktivieren der Mobilfunkeinheit aus Sicherheitsgründen unterbleibt, wenn der Vergleich des ersten Messwerts mit dem vordefinierten Schwellwert eine hinreichend hohe Wahrscheinlichkeit dafür liefert, dass sich die Vorrichtung im ersten Transportzustand befindet.

Bevorzugt ist in dem Steuerungsverfahren ein Standardmodus vorgesehen, in dem die Mobilfunkeinheit deaktiviert ist. In diesem Standardmodus verbraucht die z.B. über einen Akku betriebene Vorrichtung besonders wenig Energie.

Vorteilhaft ist es in dem Standardmodus vorgesehen, dass nach Ablauf eines definierten Zeitfensters, beispielsweise mehrere Stunden, die Schritte a. bis c. des Steuerungsverfahrens durchgeführt werden.

Es kann alternativ oder ergänzend vorgesehen sein, dass die Schritte a. bis c. in Reaktion auf das Auftreten eines Sensorsignals, insbesondere eines Bewegungssensors, durchgeführt werden. So kann sich z.B. die Vorrichtung in einem Standardmodus befinden, in dem noch längere Zeit keine Aktivierung der Mobilfunkeinheit erfolgen würde. Eine Bewegung der Vorrichtung erzeugt dann ein Signal erzeugen, aufgrund dessen vor Ablauf des Zeitfensters mittels des Messglieds und der Abläufe nach Schritt a. bis c. der momentane Transportzustand ermittelt wird, wobei in Abhängigkeit von dem Ergebnis eine Aktivierung der Mobilfunkeinheit erfolgt und ein Datensatz an die Gegenstelle verschickt wird.

Der in Schritt a. bestimmte Messwert ist in einer vorteilhaften Ausführungsform die Signalhöhe eines empfangenen GPS-Signals. Sinnvoll handelt es sich dabei um eine zeitliche Mittelung der Signalhöhe, z.B. über 30 Sekunden, wobei zudem eine Mittelung des Signals mehrerer empfangener Satelliten erfolgen kann. Ziel der Mittelung ist es, dass der Messwert eine gute Information über die den GPS-Empfänger umgebende Abschirmung liefert, so dass insbesondere die Verstauung der Vorrichtung im Rumpf eines Flugzeugs bei geschlossener Ladeklappe erkennbar wird. Alternativ oder ergänzend wird dabei auf den ersten Transportzustand der Vorrichtung erkannt, wenn die Signalhöhe des GPS-Signals einen vordefinierten Schwellwert unterschreitet oder wenn das GPS-Signal keine Geschwindigkeitsbestimmung zulässt (insbesondere bei zu schwachem Signal) oder wenn eine über das GPS-Signal bestimmte Geschwindigkeit größer als ein vordefinierter Schwellwert ist. Jedes der genannten Messergebnisse auf Basis eines GPS-Signals ist geeignet, eine hinreichende Wahrscheinlichkeit dafür zu liefern, dass der erste Transportzustand der Vorrichtung vorliegt, um entsprechend eine Aktivierung der Mobilfunkeinheit zu verhindern.

In einer vorteilhaften Weiterbildung der Erfindung wird auf einen zweiten Transportzustand, in dem eine Aktivierung der Mobilfunkeinheit erfolgt, nur erkannt, wenn eine über das GPS-Signal ermittelte Geschwindigkeit unterhalb eines vordefinierten Schwellwertes liegt und die Signalhöhe des GPS-Signals oberhalb eines vordefinierten Schwellwertes liegt. Ein solcher identifizierter zweiter Transportzustand kann insbesondere dann vorliegen, wenn sich die Vorrichtung auf einem LKW befindet, wobei ein LKW im Gegensatz zu einem Flugzeug üblicherweise keine Geschwindigkeit oberhalb des genannten Schwellwertes erreichen kann. Ein solcher geeigneter Schwellwert liegt beispielsweise bei etwa 120 km/h, da LKWs regelmäßig langsamer als diese Geschwindigkeit sind und Flugzeuge sich regelmäßig schneller als 120 km/h bewegen. Zudem sind die Laderäume von LKWs in den meisten Fällen weniger abschirmend gegenüber GPS-Signalen als die Frachträume von Flugzeugen, so dass die Signalhöhe des GPS-Signals in einem LKW im Allgemeinen stärker sein wird als in einem Flugzeug.

Ergänzend kann es vorgesehen sein, auf einen dritten Transportzustand, in dem eine Aktivierung der Mobilfunkeinheit erfolgt, nur dann erkannt wird, wenn die über das GPS-Signal ermittelte Geschwindigkeit zumindest annähernd gleich Null ist. Auf diese Weise kann z.B. unterschieden werden, ob die Vorrichtung sich auf einem LKW oder in einer Lagerhalle befindet. Insbesondere kann die ermittelte Geschwindigkeit dabei eine Mittelung der Momentangeschwindigkeit über mehrere Minuten sein. Grundsätzlich ist eine solche Unterscheidung zwischen einem zweiten Transportzustand (LKW) und einem dritten Transportzustand (Boden oder Lagerhalle) zweckmäßig, um entsprechend häufiger oder weniger häufig Daten über die Mobilfunkeinheit zu übermitteln. Insbesondere in Ruhezuständen des überwachten Objektes in einer Lagerhalle wird es im Allgemeinen gewünscht sein, die Energiequelle der Vorrichtung zu schonen und keine unnötigen Kosten zu erzeugen, so dass allenfalls alle paar Stunden Statusmeldung über die Mobilfunkeinheit übermittelt wird oder sogar nur dann, wenn sich aufgrund der Ergebnisse des Messglieds der Transportzustand ändert. Wenn sich die Vorrichtung dagegen auf einem LKW und in Bewegung befindet, kann ein entsprechend häufigerer Datenaustausch mit der Vorrichtung gewünscht sein, um den Fortgang des Transport genauer zu überwachen oder auch die Möglichkeit der frühzeitigen Erkennung eines Diebstahls zu haben.

In vorteilhafter Weiterbildung wird Schritt c. bzw. die Aktivierung der Mobilfunkeinheit nur dann durchgeführt, wenn der Vergleich gemäß Schritt b. zumindest zweimal in definiertem zeitlichen Abstand das Nichtvorliegen des ersten Transportzustands anzeigt. Hierdurch ist auf einfache Weise eine zusätzliche Absicherung gegen ein fälschliches Aktivieren der Mobilfunkeinheit in einem Flugzeug oder im Flugzustand ermöglicht. Zum Beispiel wird es auch unter ungünstigen Umständen nahezu ausgeschlossen sein, dass der erste Transportzustand vorliegt, obwohl zweimal im Abstand von mehreren Minuten jeweils ein hohes GPS-Signal in Verbindung mit einer gemessenen GPS-Geschwindigkeit unterhalb von 120 km/h vorliegt.

Allgemein bevorzugt kann eine Lokalisierung der Vorrichtung durch Übermittlung einer Kennung einer verbundenen Mobilfunkstation erfolgen. Hierdurch ergibt sich eine zumindest grobe Lokalisierung der Vorrichtung durch das Mobilfunknetz selbst, ohne dass eine aufwendige Messungen mittels eines GPS-Signals oder anderen Maßnahmen erfolgen muss. Grundsätzlich lässt sich auch eine recht genaue Lokalisierung durch die Verbindungsdaten der Mobilfunkeinheit mit umgebenden Mobilfunkstationen erzielen, wenn dies gewünscht ist.

Weiterhin bevorzugt werden Messdaten des Messglieds kontinuierlich in einem Datensatz gespeichert. Solche Messdaten können insbesondere eine Information aus der Gruppe Position, Geschwindigkeit, Luftdruck, Temperatur und Vibration umfassen. Die kontinuierliche Speicherung in einem Datensatz und die entsprechende Übermittlung eines solchen Logfiles an eine Zentrale mittels der Mobilfunkeinheit lässt bei Bedarf eine umfassende und lückenlose Ermittlung der Transport- und Zustandsgeschichte des Objekts zu, ohne dass eine andauernde Verbindung zwischen der erfindungsgemäßen Vorrichtung und einer Gegenstelle bestehen muss.

Bei einer vorteilhaften Weiterbildung des Verfahrens ist es vorgesehen, dass ein Überschreiten eines vorbestimmten geographischen Bereichs durch das Objekt eine automatische Versendung einer Nachricht durch die Mobilfunkeinheit auslöst. Hierdurch ist ein "virtueller Zaun" definierbar, bei dessen Verlassen eine möglichst zeitnahe Information erfolgt, insbesondere zum nächstmöglichen Zeitpunkt an dem der erste Transportzustand nicht vorliegt.

Allgemein vorteilhaft erfolgt eine Datenübermittlung der Mobilfunkeinheit in Reaktion auf eine Anfrage durch eine Datenzentrale. Dies kann zum Beispiel durch Verschicken einer eines Codes über SMS an die Mobilfunkeinheit erfolgen. Hierdurch wird eine unnötige Übertragung von Informationen vermieden. Je nach Anforderungen kann es alternativ oder ergänzend aber auch vorgesehen sein, dass eine Datenübermittlung der Mobilfunkeinheit nach einem vorbestimmten Zeitplan erfolgt.

Weitere Vorteile und Merkmale der Erfindung ergeben sich aus den nachfolgend beschriebenen Ausführungsbeispielen sowie aus den abhängigen Ansprüchen.

Nachfolgend werden zwei bevorzugte Ausführungsbeispiele einer erfindungsgemäßen Vorrichtung beschrieben und anhand der anliegenden Zeichnungen näher erläutert.
- Fig. 1: zeigt ein schematisches Blockschaltbild eines ersten Ausführungsbeispiels einer erfindungsgemäßen Vorrichtung.
- Fig. 2: zeigt eine schematische Darstellung der Funktionsweise der Vorrichtung aus Fig. 1.
- Fig. 3: zeigt ein schematisches Blockschaltbild eines zweiten Ausführungsbeispiels einer erfindungsgemäßen Vorrichtung.
- Fig. 4: zeigt eine schematische Darstellung der Funktionsweise der Vorrichtung aus Fig. 3.

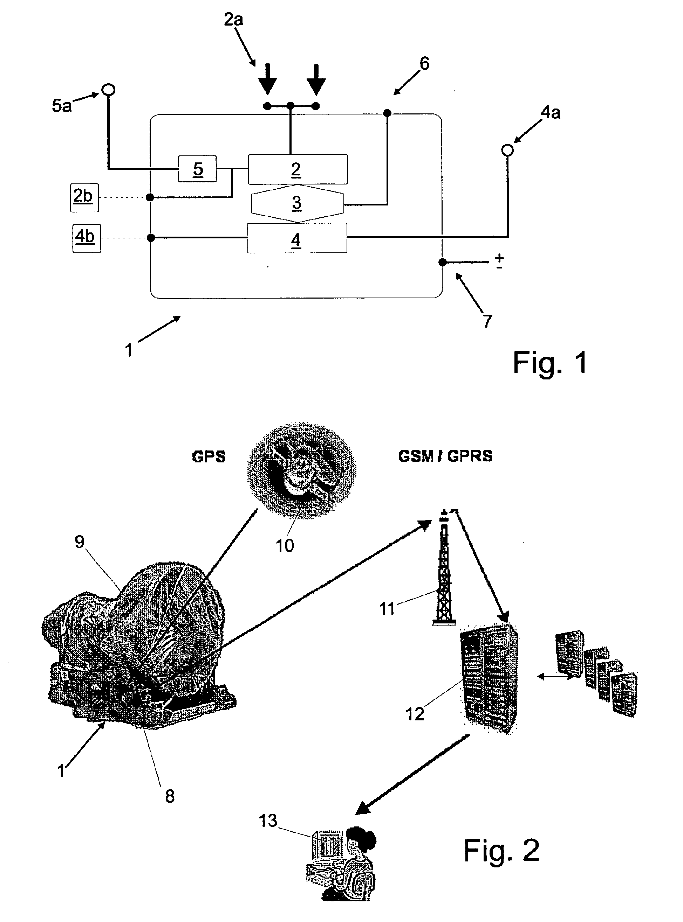

Das in Fig. 1 schematisch dargestellte erste Ausführungsbeispiel einer erfindungsgemäßen Vorrichtung besteht aus einem Modul 1, in das ein Messglied 2, ein Steuerrechner 3, eine Mobilfunkeinheit 4 und ein GPS-Empfänger 5 integriert sind. "GPS" steht hierbei für "Global Positioning System" und bezeichnet im Sinne der Erfindung ganz allgemein flächendeckende Systeme zur Positionsbestimmung. Im konkreten Ausführungsbeispiel ist mit GPS das satellitenbasierte NAVSTAR-GPS gemeint, das vom US-Verteidigungsministerium betrieben wird. Der GPS-Empfänger 5 umfasst eine Antenne 5a, die je nach Ausführung in das Modul integriert oder extern angeschlossen sein kann.

Vorliegend ist das Messglied 2 als Datenlogger ausgebildet und über Anschlüsse 2a mit Sensoren verbunden. Bei den Anschlüssen kann es sich um digitale oder auch analoge Anschlüsse handeln.

Einer der mit dem Messglied 2 verbundenen Sensoren (nicht dargestellt) ist ein Bewegungssensor, der zum Beispiel als Vibrationssensor, Beschleunigungssensor, Kreiselkompass oder ähnliches ausgebildet sein kann.

Das Messglied 2 ist zudem über eine Datenleitung mit dem GPS-Empfänger 5 verbunden, so dass der GPS-Empfänger in einer systemanalytischen Betrachtung als ein Sensor des Messglieds 2 aufgefasst werden kann.

Eine weitere Datenleitung 2b des Messglieds 2 dient einem optionalen Anschluss zusätzlicher Eingabegeräte über eine Schnittstelle, zum Beispiel einer RS232-Schnittstelle. Bei einem solchen Eingabegerät kann es sich zum Beispiel um einen Barcode-Leser oder ähnliches handeln.

Das Messglied 2 ist über eine Schnittstelle, zum Beispiel einen Datenbus, mit dem Steuerrechner 3 verbunden. Eine Steuerleitung 6 ist unmittelbar mit dem Steuerrechner 3 verbunden, um zum Beispiel eine Fernsteuerung der Vorrichtung zu ermöglichen.

Die Mobilfunkeinheit 4 ist als GSM-Modem ausgebildet und kann mit dem weltweit verbreiteten Mobilfunknetz nach GSM-Standard verbunden werden. Das GSM-Modem ist über eine Schnittstelle mit dem Steuerrechner verbunden. Über diese Schnittstelle kann die Mobilfunkeinheit 4 wahlweise aktiviert oder deaktiviert werden. Die Mobilfunkeinheit 4 ist mit einer Antenne 4a verbunden und weist zudem einen Anschluss 4b auf, über den als Option -beispielsweise zu Wartungszwecken- eine Sprecheinrichtung zur Verwendung des GSM-Modems als Mobiltelefon anschließbar ist.

Das Modul 1 hat weiterhin einen Anschluss 7 zur externen Stromversorgung. In das Modul 1 ist ein für die Luftfahrt zugelassener Akkumulator (nicht dargestellt) integriert, der über diesen Anschluss 6 aufgeladen werden kann. Auf diese Weise kann das Modul 1 über einen längeren Zeitraum von mehreren Tagen oder auch Wochen autark betrieben werden. Im Fall der Optimierung des Energieverbrauchs durch das Steuerungsverfahren der Vorrichtung kann ein Einsatzzeitraum von bis zu 4 Monaten ermöglicht werden. Solche Vorrichtungen haben große, für die Luftfahrt zugelassene Akkumulatoren bei einem Gesamtgewicht von etwa 9 kg.

Aufgrund der teilweise extremen Bedingungen im Lufttransport ist das Modul für einen besonders großen Temperaturbereich von -56 °C bis +80 °C ausgelegt.

Fig. 2 zeigt eine beispielhafte Übersicht eines Gesamtsystems unter Einbindung der erfindungsgemäßen Vorrichtung. Dabei ist das Modul 1 an einem TriebwerksTransportgestell 8 vorgesehen, wobei ein zu transportierendes Flugzeugtriebwerk 9 auf dem Gestell 8 angebracht ist. Triebwerke 9 werden regelmäßig zum Zweck der Wartung mittels solcher Transportgestelle weiträumig verschickt. Dabei bedeutet zum einen der hohe Wert des Transportguts eine besondere Anforderung an die logistische Kontrolle, und besonders im Fall von Triebwerken bestehen hohe Anforderungen an die planmäßige Beförderung und Auslieferung.

Das Modul 1 dient somit der Positionsüberwachung des Objekts 8, 9. Hierzu werden Daten vom GPS-Sattelitensystem 10 empfangen. Die empfangenen Positionsdaten und gegebenenfalls weitere ermittelte Zustandsdaten werden über die Verbindung der Mobilfunkeinheit 4 des Moduls 1 mit einer Mobilfunkgegenstelle 11 per SMS oder GPRS oder andere geeignete Protokolle zur Datenübermittlung übertragen und hierdurch an ein Rechenzentrum 12 gesendet. Ein Nutzer 13 kann diese Informationen von dem Rechenzentrum abrufen, zum Beispiel über eine Internet-Anbindung. Dies kann auf einfache Weise zum Beispiel mittels einer Homepage im World Wide Web erfolgen. Hierbei sind ja nach Anforderungen bekannte Sicherheitsmassnahmen (Passwort, verschlüsselte Übertragung) vorgesehen.

Nachfolgend wird ein Beispiel eines möglichen Steuerungsverfahrens der Vorrichtung detailliert beschrieben und erläutert.

Zum Zweck der Energieeinsparung befindet sich die Vorrichtung im Regelfall in einem Standard-Modus, in dem der GPS-Empfänger und die Mobilfunkeinheit deaktiviert sind. Der Standard-Modus wird entweder dadurch unterbrochen, dass ein definiertes Zeitfenster (typisch mehrere Stunden) abläuft oder der Bewegungssensor eine Bewegung anzeigt.

Nachfolgend wird dann zunächst der Transportzustand ermittelt, wobei in der vorliegenden Ausführungsform zwischen drei Transportzuständen unterschieden wird. Wichtiger Parameter ist dabei jeweils die empfangene Signalstärke des GPS-Signals, die in der Einheit "dbHz" bezeichnet wird, welche im Wesentlichen ein Signal-Untergrund-Verhältnis angibt:

### 1. Transportzustand "Boden"

Im Transportzustand "Boden" ist die Mobilfunkeinheit am Modul 1 aktivierbar und Bedarf wird eine Datenkommunikation über SMS oder GPRS aufgebaut. Der Transportzustand "Boden" wird über das
- GPS Signalbild
- Signal das Bewegungssensors und
- die GPS Geschwindigkeitsinformation
ermittelt.

Variante "Boden 1":
Der Bewegungssensor liefert ein Signal = 1 (in Bewegung)
=> GPS-Empfänger wird aktiviert
=> GPS Signal >= 55 dbHz (andernfalls Abbruch, gegebenenfalls Prüfung auf Transportzustand "LKW 2")
=> ist die gemessene Geschwindigkeit = 0-2 km/h
=> JA
   => wird die Mobilfunkeinheit aktiv geschaltet
   => Aufbau Datenkommunikation
   => nach Übertragung des Datensatzes werden Mobilfunkeinheit 4 und der GPS-Empfänger 5 inaktiviert
=> Vorrichtung geht in Standard-Modus.

Variante "Boden 2":
Der Bewegungssensor liefert ein Signal = 0 (in Ruhezustand)
=> Zeitfenster für Eigenaktivierung erreicht (JA)
=> GPS-Empfänger wird aktiviert
=> GPS Signal >= 55 dbHz (andernfalls Abbruch, gegebenenfalls Prüfung auf Transportzustand "LKW 2")
=> ist die gemessene Geschwindigkeit = 0-2 km/h
=> JA
   => wird die Mobilfunkeinheit aktiv geschaltet
   => Aufbau Datenkommunikation
   => nach Übertragung des Datensatzes werden Mobilfunkeinheit 4 und der GPS-Empfänger 5 inaktiviert
=> Vorrichtung geht in Standard-Modus.

### 2. Transportzustand "LKW"

Im Transportzustand "LKW" ist die Mobilfunkeinheit am Modul 1 aktivierbar und kann eine Datenkommunikation über SMS oder GPRS aufgebaut werden. Der Transportzustand "LKW" wird über
- das GPS Signalbild
- das Signal das Bewegungssensors und
- die GPS Geschwindigkeitsinformation
ermittelt.

Variante "LKW 1 ":
Der Bewegungssensor liefert ein Signal =1 (in Bewegung)
=> GPS-Empfänger wird aktiviert
=> GPS Signal >= 55 dbHz (falls nicht, Prüfung auf Variante "LKW 2")
=> ist die gemessene Geschwindigkeit < 120 km/h
=> JA
   =>nach 3 Min
   => GPS-Signal >= 55 dbHz
   => erneute Geschwindigkeitsmessung < 120 km/h
=> JA
   => die Mobilfunkeinheit wird aktiv geschaltet
   => Aufbau Datenkommunikation
   => nach Übertragung des Datensatzes werden Mobilfunkeinheit und GPS-Empfänger inaktiviert
   => die Vorrichtung geht in den Standard-Modus
=> NEIN (Geschwindigkeit größer 120 km/h)
   => GSM-Modul wird nicht aktiviert (Transportzustand "Flug")
   => Vorrichtung geht in den Standard-Modus.

Variante "LKW 2":
Der Bewegungssensor liefert ein Signal =0 (in Ruhezustand)
=> Zeitfenster für Eigenaktivierung erreicht (JA)
=> GPS-Empfänger wird aktiviert
=> GPS Signal >= 40 dbHz (reduzierter Wert)
=> ist die gemessene Geschwindigkeit < 120 km/h
=> JA
   => nach 3 Min
   => GPS Signal >= 55 dbHz
   => erneute Geschwindigkeitsmessung < 120 km/h
=> JA
   => Mobilfunkeinheit wird aktiviert
   => Aufbau Datenkommunikation
   => nach Übertragung des Datensatzes werden Mobilfunkeinheit und GPS-Empfänger inaktiviert
   => Vorrichtung geht in Standard-Modus
=> NEIN (Geschwindigkeit größer 120 km/h)
   => Mobilfunkeinheit wird nicht aktiviert (Transportzustand "Flug")
   => Vorrichtung geht in Standard-Modus.

### 3. Transportzustand "Flug"

Im Transportzustand "Flug" ist die Mobilfunkeinheit der Vorrichtung nicht aktiv und es wird keine Datenkommunikation über SMS oder GPRS aufgebaut.
Der Transportzustand "Flug" wird über
- das GPS Signalbild
- das Signal das Bewegungssensors und
- die GPS Geschwindigkeitsinformation
ermittelt.

Variante "Flug 1"
Der Bewegungssensor liefert ein Signal =1 (in Bewegung)
=> GPS-Empfänger wird aktiviert
=> GPS-Signal <= 40 dbHz (reduzierter Wert)
=> JA
   => nach 3 Min.
   => GPS Signal <= 40 dbHz (reduzierter Wert)
   => erneute Geschwindigkeitsmessung > 120 km/h
   => JA
   => die Mobilfunkeinheit wird nicht aktiv geschaltet (Transportzustand "Flug")
   => Vorrichtung geht in den Standard-Modus
=> NEIN (Keine GPS-Daten zur Berechnung vorhanden)
   => die Mobilfunkeinheit wird nicht aktiv geschaltet (Transportzustand "Flug")
   => Vorrichtung geht in den Standard-Modus.

Variante "Flug 2"
Der Bewegungssensor liefert ein Signal =0 (in Ruhezustand)
=> Zeitfenster für Eigenaktivierung erreicht (JA)
=> GPS-Empfänger wird aktiviert
=> GPS Signal <= 40 dbHz (reduzierter Wert)
=> JA
=> ist die gemessene Geschwindigkeit > 120 km/h
=> JA
   => nach 3 Min.
   => GPS Signal <= 40 dbHz (reduzierter Wert)
   => Geschwindigkeitsmessung > 120 km/h
   => JA
   => die Mobilfunkeinheit wird nicht aktiv geschaltet (Transportzustand "Flug")
   => Vorrichtung geht in den Standard-Modus
   => NEIN
   => Vorrichtung geht in den Standard-Modus
=> NEIN (Keine GPS-Daten zur Berechnung vorhanden)
   => Mobilfunkeinheit wird nicht aktiv geschaltet (Transportzustand "Flug")
   => Vorrichtung geht in Standard-Modus.

Insgesamt ist durch die zuvor gelisteten Schritte des Steuerungsverfahrens sichergestellt, dass die Mobilfunkeinheit nicht in einem Flugzeug aktiviert werden kann und somit keine Mobilfunkstrahlung die Elektronik des Flugzeugs stören kann. Dabei wird eine doppelte Absicherung dadurch erreicht, dass zwei voneinander unabhängige Bedingungen erfüllt sein müssen, um auf ein Nichtvorliegen des Transportzustands "Flug" zu schließen und somit gegebenenfalls die Mobilfunkeinheit zu aktivieren. Zum einen ist dies jeweils eine Mindestsignalhöhe des GPS-Signals, wie sie im Inneren eines Laderaums eines Flugzeugs regelmäßig nicht vorliegt. Ein zweites Kriterium für das Nichtvorliegen des Flugzustands besteht im beschriebenen Ausführungsbeispiel in der Unterschreitung einer Geschwindigkeitsschwelle, unterhalb derer sich ein Flugzeug regelmäßig nicht in der Luft befinden kann (z.B. 120 km/h).

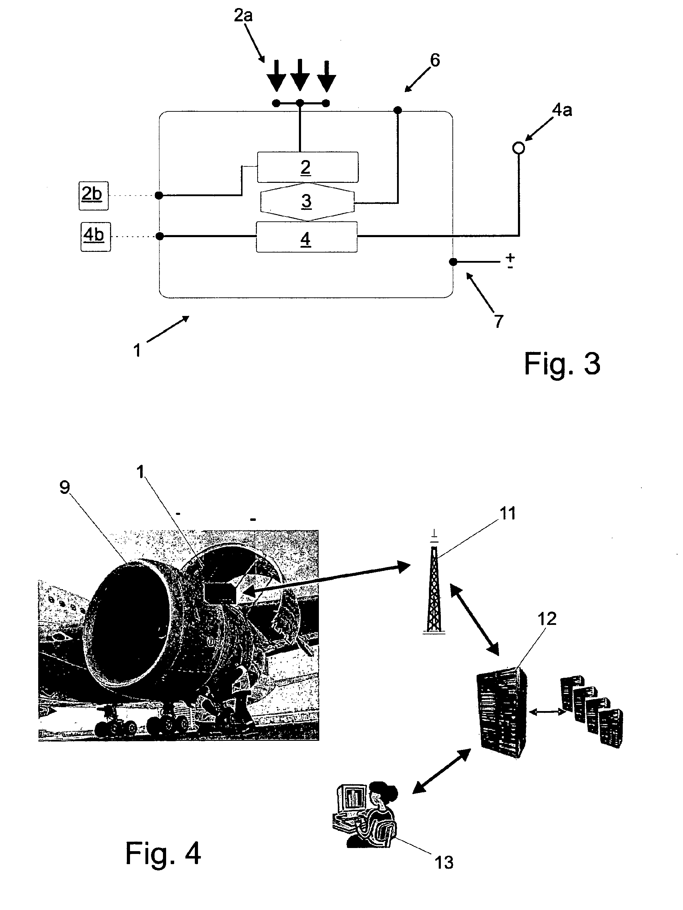

Ein zweites bevorzugtes Ausführungsbeispiel der Erfindung ist in Fig. 3 schematisch dargestellt. Hierbei handelt es sich um eine Vorrichtung, die zur Anbringung an bzw. in im Einsatz befindlichen Flugzeugtriebwerken optimiert ist.

Im Unterschied zum ersten Ausführungsbeispiel umfasst diese Vorrichtung keinen GPS-Empfänger. Eine Positionsbestimmung der Vorrichtung ergibt sich anstelle einer GPS-Positionsbestimmung dabei nur durch das Mobilfunknetz, in dem sich die Mobilfunkeinheit nach entsprechender Feststellung des Nichtvorliegens des ersten Transportzustands (Flugzustand) anmeldet. Jede Basisstation eines Mobilfunknetzes verfügt über eine MSC-Kennung (MSC = Mobile Switching Center), so dass zumindest eine grobe Positionsbestimmung über diese Kennung ermöglicht ist. Es ist auf bekannte Weise möglich, auch sehr genaue Positionsbestimmungen mit Hilfe des Mobilfunknetzes vorzunehmen. Zumindest für den Fall von montierten und im Betrieb befindlichen Triebwerken erübrigt sich jedoch regelmäßig eine derart genaue Bestimmung, da es zur Lokalisierung meist ausreicht, die Kennung der verbundenen Basisstation einem bestimmten Verkehrsflughafen zuzuordnen.

Abgesehen vom Verzicht auf den GPS-Empfänger umfasst die Vorrichtung des zweiten Ausführungsbeispiels ebenfalls ein Messglied 2, einen Steuerrechner 3 und eine Mobilfunkeinheit 4 mit Antenne 4a, wobei diese Bestandteile baulich zu einem Modul 1 integriert sind.

Zur Entscheidung über das Vorliegen des ersten Transportzustands hat die Vorrichtung des zweiten Ausführungsbeispiels mehrere Sensoren zur Verfügung, die über die Anschlüsse 2a mit dem Messglied 2 verbunden sind. Die Sensoren können innerhalb oder außerhalb des Moduls 1 angeordnet sein.

Einer erster Sensor und auch ein zweiter Sensor sind als Vibrationssensoren ausgebildet, wobei ein in Betrieb befindliches Triebwerk regelmäßig ein Anschlagen des Vibrationssensors bewirkt. Das Vorsehen von zwei Sensoren dient der Redundanz und somit der Sicherheit.

Ein weiterer Sensor ist als Ultraschall-Sensor ausgebildet. Zumindest im Flugzustand wird im Triebwerksbereich durch vorbeiströmende Luft regelmäßig ein hoher Ultraschallpegel erzeugt, auf den der Ultraschallsensor anspricht.

Ein weiterer Sensor ist als Luftdruck- bzw. Höhensensor ausgebildet. Hierdurch kann die momentane Flughöhe ermittelt werden, so dass auch im Fall einer Triebwerksabschaltung im Flug auf das Vorliegen eines Flugzustands erkannt wird.

Weiterhin sind einer oder mehrere Temperatursensoren vorgesehen, deren Messwerte zumindest während des Fluges kontinuierlich gespeichert werden, so dass sich wichtige Informationen über die Betriebszustände des Triebwerks ergeben.

Zudem ist ein "Offwing"-Sensor vorgesehen, über den erkannt wird, ob das Treibwerk am Flügel montiert ist oder nicht. Wird das Triebwerk montiert oder demontiert, so wird dieser Vorgang über den Sensor erfasst und aufgezeichnet.

Die Vorrichtung gemäß dem zweiten Ausführungsbeispiel funktioniert nun wie folgt:

Grundsätzlich wird die Mobilfunkeinheit 4 nur aktiviert, wenn kein Flugzustand vorliegt. Mittels der Sensoren und des Messglieds wird erkannt, ob ein Transportzustand "Flug" oder ein Transportzustand "Boden" vorliegt. Falls der Transportzustand "Boden" vorliegt kann die Mobilfunkeinheit aktiviert werden und Daten an die Zentrale übermitteln. Üblich ist es, dass die Datenübermittlung einmal pro Tag erfolgt. Es kann zudem vorgesehen sein, dass die Datenübermittlung in Reaktion auf eine Anforderung durch die Zentrale erfolgt, zum Beispiel durch versenden einer SMS-Nachricht an die Mobilfunkeinheit der Vorrichtung.

Zumindest im Transportzustand "Flug" erfolgt eine ständige Speicherung der Messdaten der Sensoren, insbesondere Vibration, Ultraschallsignal, Luftdruck bzw. Flughöhe und Temperatur. Das gespeicherte Datenprotokoll kann vollständig oder teilweise bei der Übermittlung der Positionsmeldung an die Zentrale enthalten sein. Aus den gespeicherten Informationen über das Vorliegen des Transportzustands "Flug" lassen sich auf einfache Weise die Betriebsstunden des Triebwerks ableiten.

Das Steuerungsverfahren der Vorrichtung zur Erkennung des jeweils vorliegenden Transportzustands umfasst die folgenden Schritte:
- Wenn das Signalbild der Vibrationssensoren zumindest in einem vorbestimmten Frequenzbereich eine vorbestimmte Amplitude überschreitet, so liegt der Transportzustand "Flug" vor und die Mobilfunkeinheit 4 kann nicht aktiviert werden.
- Wenn die Vibrationssensoren keinen Flugzustand anzeigen, werden weitere Prüfschritte durchgeführt, um den Transportzustand "Boden" sicher zu erkennen bzw. um einen Flugzustand bei abgeschaltetem Triebwerk auszuschließen:
   - Bei einem Luftdruck entsprechend einer Höhe von über 4000 Metern wird die Mobilfunkeinheit nicht aktiviert;
   - bei einer Höheninformation von unter 4000 Metern wird zudem der Ultraschallsensor ausgewertet;
   - ist das Ultraschallsignal oberhalb eines vorbestimmten Schwellwerts, so wird die Mobilfunkeinheit nicht aktiviert;
   andernfalls wird auf den Transportzustand "Boden" erkannt und die Mobilfunkeinheit kann aktiviert werden.

Nach dem Aktivieren der Mobilfunkeinheit erfolgt automatisch die Anmeldung an einer Basisstation des Mobilfunknetzes.

Das Modul 1 verfügt zudem über eine interne Spannungsversorgung, so dass auch ohne externe Spannungsversorgung eine Statusüberwachung erfolgt. Diese kann sich zumindest auf den "Offwing"-Sensor beziehen. Dabei kann das Steuerungsverfahren vorsehen, dass im Fall einer Demontage des Treibwerks, die durch den "Offwing"-Sensor erkannt wird, sofort eine entsprechende Statusmeldung über die Mobilfunkeinheit an die Zentrale versendet wird. Dies ist insbesondere im Fall von Leihtriebwerken von Interesse, zum Beispiel um einen unbefugten Eingriff sofort zu erkennen.

Die jeweils besonderen Merkmale des ersten und des zweiten Ausführungsbeispiels sind nicht auf diese Beispiele beschränkt, sondern können je nach Anforderungen sinnvoll miteinander kombiniert werden. Zum Beispiel kann auch im Fall einer Triebwerksüberwachung gemäß dem zweiten Ausführungsbeispiel ein GPS-Empfänger vorgesehen sein oder es könnte im Fall des ersten Ausführungsbeispiels auf einen GPS-Empfänger verzichtet werden.

## Patentansprüche

1. Vorrichtung zur Positionskontrolle eines Objekts, umfassend eine Mobilfunkeinheit (4) zur Übermittlung von Daten über ein Mobilfunknetz (11),
ein Messglied (2) und
einen Steuerrechner (3),
wobei die Mobilfunkeinheit (4) über den Steuerrechner (3) ansteuerbar ist und wobei das Messglied (2) mit dem Steuerrechner (3) verbunden ist,
**dadurch gekennzeichnet,**
**dass** mittels des Messglieds (2) ein erster Transportzustand unterscheidbar ist, in dem sich die Vorrichtung in einem Flugzeug oder in einem Flugzustand befindet.

2. Vorrichtung nach Anspruch 1, **dadurch gekennzeichnet, dass** die Mobilfunkeinheit (4) aufgrund der Erkennung des ersten Transportzustands deaktiviert ist, so dass in dem ersten Transportzustand keine Funksignale durch die Mobilfunkeinheit (4) ausgestrahlt werden.

3. Vorrichtung nach Anspruch 1 oder 2, **dadurch gekennzeichnet, dass** die Mobilfunkeinheit (4), das Messglied (2) und der Steuerrechner (3) als einheitliches Modul (1) ausgebildet sind, wobei das Modul (1) insbesondere eine autarke Energieversorgung umfasst.

4. Vorrichtung nach einem der vorhergehenden Ansprüche, **dadurch gekennzeichnet, dass** das Messglied (2) einen Sensor (2a) zur Höhenmessung aufweist.

5. Vorrichtung nach einem der vorhergehenden Ansprüche, **dadurch gekennzeichnet, dass** das Messglied (2) einen Bewegungssensor (2a) aufweist.

6. Vorrichtung nach einem der vorhergehenden Ansprüche, **dadurch gekennzeichnet, dass** das Messglied (2) zumindest einen, insbesondere zumindest zwei Vibrationssensoren (2a) aufweist.

7. Vorrichtung nach einem der vorhergehenden Ansprüche, **dadurch gekennzeichnet, dass** das Messglied (2) zumindest einen Ultraschallsensor (2a) aufweist.

8. Vorrichtung nach einem der vorhergehenden Ansprüche, **dadurch gekennzeichnet, dass** das Messglied (2) einen Empfangsteil für ein Satelliten-Ortungssystem (GPS) (5) umfasst.

9. Vorrichtung nach Anspruch 8, **dadurch gekennzeichnet, dass** über das Messglied (2) eine Signalstärke des Satellitenortungssystems ermittelbar ist, wobei die Signalstärke zumindest optional zur Unterscheidung des ersten Transportzustands dient.

10. Vorrichtung nach einem der Ansprüche 8 oder 9, **dadurch gekennzeichnet, dass** eine Information, insbesondere die momentane Position und/oder Geschwindigkeit, durch das Satellitenortungssystem ermittelt wird.

11. Vorrichtung nach Anspruch 10, **dadurch gekennzeichnet, dass** die ermittelte Position und/oder Geschwindigkeit über die Mobilfunkeinheit (4) weitergeleitet wird.

12. Vorrichtung nach einem der vorhergehenden Ansprüche, **dadurch gekennzeichnet, dass** mittels des Messglieds (2) ein weiterer Transportzustand unterscheidbar ist, wobei das Objekt in dem weiteren Transportzustand in Bewegung ist und sich nicht in einem Flugzeug befindet.

13. Vorrichtung nach einem der vorhergehenden Ansprüche, **dadurch gekennzeichnet, dass** mittels des Messglieds (2) ein weiterer Transportzustand unterscheidbar ist, in dem das Objekt sich nicht in einem Flugzeug und nicht in Bewegung befindet.

14. Vorrichtung nach einem der Ansprüche 1 bis 13, **dadurch gekennzeichnet, dass** auf das Nichtvorliegen des ersten Transportzustands nur dann erkannt wird, wenn zumindest zwei voneinander unabhängige Signale das Nichtvorliegen des ersten Transportzustands anzeigen.

15. Vorrichtung nach Anspruch 14, **dadurch gekennzeichnet, dass** die zwei voneinander unabhängigen Signale aus der Gruppe GPS-Signalstärke, GPS-ermittelte Geschwindigkeit, Vibration und Luftdruck ausgewählt sind.

16. Vorrichtung nach einem der Ansprüche 1 bis 15, **dadurch gekennzeichnet, dass** die Mobilfunkeinheit (4) nach dem GSM-Standard arbeitet.

17. Transportgut zur Beförderung mit einem Luftfahrzeug, **dadurch gekennzeichnet, dass** an dem Transportgut eine Vorrichtung nach einem der Ansprüche 1 bis 16 angeordnet ist.

18. Transportgut nach Anspruch 14, **dadurch gekennzeichnet, dass** das Transportgut ein ULD-Container ist.

19. Transportgut nach Anspruch 17, **dadurch gekennzeichnet, dass** das Transportgut ein Triebwerkstransportgestell (9) ist.

20. Triebwerk für ein Luftfahrzeug, **dadurch gekennzeichnet, dass** an dem Triebwerk (10) eine Vorrichtung nach einem der Ansprüche 1 bis 16 angeordnet ist.

21. Verfahren zur Steuerung einer Vorrichtung nach einem der Ansprüche 1 bis 16, umfassend die Schritte
a. Messen eines ersten Messwerts mittels des Messglieds (2);
b. Vergleichen des ersten Messwerts mit einem ersten vordefinierten Schwellwert;
c. Aktivieren der Mobilfunkeinheit (4) in Abhängigkeit vom Ausgang des Vergleichs in Schritt b.;

22. Verfahren nach Anspruch 21, **dadurch gekennzeichnet, dass** ein Standard-Modus vorgesehen ist, in dem die Mobilfunkeinheit (4) deaktiviert ist.

23. Verfahren nach Anspruch 22, **dadurch gekennzeichnet, dass** in dem Standard-Modus nach Ablauf eines definierten Zeitfensters die Schritte a. bis c. durchgeführt werden.

24. Verfahren nach einem der Ansprüche 21 bis 23, **dadurch gekennzeichnet, dass** bei Auftreten eines Sensorsignals, insbesondere eines Bewegungssensors, die Schritte a. bis c. durchgeführt werden.

25. Verfahren nach einem der Ansprüche 21 bis 24, **dadurch gekennzeichnet, dass** der Messwert eine Signalhöhe eines empfangenen GPS-Signals ist,

26. Verfahren nach Anspruch 25, **dadurch gekennzeichnet, dass** auf den ersten Transportzustand der Vorrichtung erkannt wird, wenn
- die Signalhöhe des GPS-Signals einen vordefinierten Schwellwert unterschreitet, oder
- wenn das GPS-Signal keine Geschwindigkeitsbestimmung zulässt, oder
- wenn eine über das GPS-Signal bestimmte Geschwindigkeit größer als ein vordefinierter Schwellwert ist.

27. Verfahren nach Anspruch 25 oder 26, **dadurch gekennzeichnet, dass** auf einen zweiten Transportzustand, in dem eine Aktivierung der Mobilfunkeinheit erfolgt, nur dann erkannt wird, wenn eine über das GPS-Signal ermittelte Geschwindigkeit unterhalb eines vordefinierten Schwellwertes liegt und die Signalhöhe des GPS-Signals oberhalb eines vordefinierten Schwellwerts liegt.

28. Verfahren nach Anspruch 27, **dadurch gekennzeichnet, dass** auf einen dritten Transportzustand, in dem eine Aktivierung der Mobilfunkeinheit erfolgt, nur dann erkannt wird, wenn die über das GPS-Signal ermittelte Geschwindigkeit zumindest annähernd gleich Null ist.

29. Verfahren nach einem der Ansprüche 21 bis 28, **dadurch gekennzeichnet, dass** Schritt c. nur durchgeführt wird, wenn der Vergleich gemäß Schritt b. zumindest zweimal in definiertem zeitlichen Abstand das Nichtvorliegen des ersten Transportzustands anzeigt.

30. Verfahren nach einem der Ansprüche 21 bis 29, **dadurch gekennzeichnet, dass** eine Lokalisierung der Vorrichtung durch Übermittlung einer Kennung einer verbundenen Mobilfunkstation (11) erfolgt.

31. Verfahren nach einem der Ansprüche 21 bis 30, **dadurch gekennzeichnet, dass** Messdaten des Messglieds (2) kontinuierlich in einem Datensatz gespeichert werden.

32. Verfahren nach Anspruch 31, **dadurch gekennzeichnet, dass** die Messdaten zumindest eine Information aus der Gruppe Position, Geschwindigkeit Luftdruck, Temperatur und Vibration umfassen.

33. Verfahren nach einem der Ansprüche 21 bis 32, **dadurch gekennzeichnet, dass** ein Überschreiten eines vorbestimmten geographischen Bereichs durch das Objekt eine automatische Versendung einer Nachricht durch die Mobilfunkeinheit (4) auslöst.

34. Verfahren nach einem der Ansprüche 21 bis 33, **dadurch gekennzeichnet, dass** eine Datenübermittlung der Mobilfunkeinheit (4) in Reaktion auf eine Anfrage durch eine Datenzentrale erfolgt.

35. Verfahren nach einem der Ansprüche 21 bis 33, **dadurch gekennzeichnet, dass** eine Datenübermittlung der Mobilfunkeinheit (4) nach einem vorbestimmten Zeitplan erfolgt.
